# EUROPÄISCHE PATENTSCHRIFT

(11) **EP 3 956 102 B1**
(45) Veröffentlichungstag und Bekanntmachung des Hinweises auf die Patenterteilung: **25.09.2024**
(21) Anmeldenummer: 20720785.3
(22) Anmeldetag: 17.04.2020
(51) Int. Cl.: B24B 27/00, B24B 27/027

(54) **VORRICHTUNG ZUM BEARBEITEN VON OBERFLÄCHEN**
DEVICE FOR THE MACHINING OF SURFACES
DISPOSITIF SERVANT AU TRAITEMENT DE SURFACES

(30) Priorität: 19.04.2019 DE 102019110421
(43) Veröffentlichungstag der Anmeldung: 23.02.2022
(73) Patentinhaber: FerRobotics Compliant Robot Technology GmbH, 4040 Linz (AT)
(72) Erfinder: NADERER, Ronald, 4040 Linz (AT)
(74) Vertreter: Westphal, Mussgnug & Partner, Patentanwälte mbB
(86) Internationale Anmeldenummer: PCT/EP2020/060818
(87) Internationale Veröffentlichungsnummer: WO 2020/212552

(56) Entgegenhaltungen:
- WO-A1-2018/055189
- DE-B3- 102016 104 412
- DE-U1- 9 404 159
- US-A1- 2003 000 928

## Beschreibung

### TECHNISCHES GEBIET

Die vorliegende Erfindung betrifft das Gebiet der Robotik und insbesondere eine Vorrichtung zum robotergestützten Bearbeiten von Werkstückoberflächen.

### HINTERGRUND

Bei der robotergestützten Oberflächenbearbeitung wird eine Werkzeugmaschine wie z.B. eine Schleif- oder Poliermaschine (z.B. eine elektrisch betriebene Schleifmaschine mit rotierender Schleifscheibe als Schleifwerkzeug) von einem Manipulator, beispielsweise einem Industrieroboter, geführt. Dabei kann die Werkzeugmaschine auf unterschiedliche Weise mit dem sogenannten TCP (*Tool Center Point*) des Manipulators gekoppelt sein; der Manipulator kann in der Regel Position und Orientierung der Maschine praktisch beliebig einstellen und die Werkzeugmaschine z.B. auf einer Trajektorie parallel zur Oberfläche des Werkstücks bewegen. Industrieroboter sind üblicherweise positionsgeregelt, was eine präzise Bewegung des TCP entlang der gewünschten Trajektorie ermöglicht.

Um beim robotergestützten Schleifen ein gutes Ergebnis zu erzielen, ist in vielen Anwendungen eine Regelung der Prozesskraft (Schleifkraft) nötig, was mit herkömmlichen Industrierobotern oft nur schwer mit hinreichender Genauigkeit zu realisieren ist. Die großen und schweren Armsegmente eines Industrieroboters besitzen eine zu große Massenträgheit, als dass ein Regler (*closed-loop controller*) rasch genug auf Schwankungen der Prozesskraft reagieren könnte. Um dieses Problem zu lösen, kann zwischen dem TCP des Manipulators und der Werkzeugmaschine ein im Vergleich zum Industrieroboter kleiner (und leichter) Linearaktor angeordnet sein, der den TCP des Manipulators mit der Werkzeugmaschine koppelt. Der Linearaktor regelt während der Oberflächenbearbeitung lediglich die Prozesskraft (also die Anpresskraft zwischen Werkzeug und Werkstück), während der Manipulator die Werkzeugmaschine samt Linearaktor positionsgeregelt entlang der gewünschten Trajektorie bewegt. Durch die Kraftregelung kann der Linearaktor Ungenauigkeiten in der Lage und der Form des zu bearbeitenden Werkstücks sowie auch Ungenauigkeiten der Trajektorie des Manipulators (innerhalb gewisser Grenzen) ausgleichen. Nichtsdestotrotz kann es für das Bearbeitungsergebnis problematisch sein, wenn der Roboter das Schleifwerkzeugt nicht tangential auf die Oberfläche des Werkstücks ansetzt.

Die Publikation WO 2018/055189 A1 offenbart eine Werkzeugmaschine zum robotergestützten Bearbeiten von Oberflächen, welche eine erste Trägerplatte und eine zweite Trägerplatte aufweist. Die erste Trägerplatte ist zur Montage an einem Manipulator ausgebildet. An der zweiten Trägerplatte ist eine Abtriebswelle zur Aufnahme eines rotierbaren Werkzeugs gelagert. Die Werkzeugmaschine weist des Weiteren einen Linearaktor, der zwischen der ersten Trägerplatte und der zweiten Träger-platte wirkt, sowie einen Motor auf, der an der ersten Trägerplatte montiert ist. Die Werkzeugmaschine weist weiter eine Teleskopwelle mit einem ersten Wellenteil und einem zweiten Wellenteil auf, der relativ zum ersten Wellenteil verschiebbar ist. Der erste Wellenteil ist mit einer Motorwelle des Motors gekoppelt, und der zweite Wellenteil ist an der zweiten Trägerplatte gelagert. Die Teleskopwelle ist mit der Abtriebswelle über ein Getriebe gekoppelt.

Die Erfinder haben es sich zur Aufgabe gemacht, eine verbesserte Vorrichtung für robotergestützte Oberflächenbearbeitung sowie ein entsprechendes Verfahren zu entwickeln, wobei insbesondere die Anforderungen an die Genauigkeit der vom Roboter ausgeführten Bewegung gelockert werden sollen.

### ZUSAMMENFASSUNG

Die oben genannte Aufgabe wird durch die Vorrichtung gemäß Anspruch 1 gelöst. Unterschiedliche Ausführungsformen und Weiterentwicklungen sind Gegenstand der abhängigen Ansprüche.

Ein Ausführungsbeispiel betrifft eine Vorrichtung zum robotergestützten Bearbeiten von Oberflächen. Gemäß einem Beispiel weist die Vorrichtung eine Trägerplatte zur Montage der Vorrichtung an einem Manipulator, einen Motor, einen Linearaktor und einen Bearbeitungskopf auf. Der Bearbeitungskopf ist mittels des Linearaktors mit der Trägerplatte gekoppelt, und er weist eine Antriebswelle zum direkten oder indirekten Antreiben eines rotierbaren Werkzeugs auf. Die Vorrichtung weist weiter eine flexible Welle auf, die eine Motorwelle des Motors mit der Antriebswelle des Bearbeitungskopfs koppelt. Die Trägerplatte muss nicht notwendigerweise an einem Manipulator montiert sein, sondern kann auch stationär sein, beispielsweise ein Teil eines Gehäuses, eines Stativs oder einer sonstigen Aufhängung. Außerdem weist die Vorrichtung weiter ein Gelenk auf, das den Bearbeitungskopf und den Linearaktor derart mechanisch koppelt, dass eine einachsige oder eine zweiachsige Verkippung des Bearbeitungskopfs ermöglicht wird

In einem weiteren Ausführungsbeispiel ist das Gelenk als ein Kreuzgelenk ausgebildet, das den Bearbeitungskopf und den Linearaktor derart mechanisch koppelt, dass eine zweiachsige Verkippung des Bearbeitungskopfs ermöglicht wird.

### KURZE BESCHREBIBUNG DER ZEICHNUNGEN

Die Erfindung wird nachfolgend anhand von den in den Abbildungen dargestellten Beispielen näher erläutert. Die Darstellungen sind nicht zwangsläufig maßstabsgetreu und die Erfindung beschränkt sich nicht nur auf die dargestellten Aspekte. Vielmehr wird Wert darauf gelegt, die der Erfindung zugrunde liegenden Prinzipien darzustellen. In den Abbildungen zeigt: Die Abbildungen zeigen:
Figur 1 ist eine exemplarische schematische Darstellung einer robotergestützten Schleifvorrichtung mit einer Schleifmaschine, die mit einem Industrieroboter mittels eines kraftgeregelten Linearaktors gekoppelt ist; der Linearaktor bewirkt eine mechanische Entkopplung von Industrieroboter und Schleifmaschine.
Figur 2 illustriert ein exemplarisches Ausführungsbeispiel einer Werkzeugmaschine mit integriertem Linearaktor zur mechanischen Entkopplung einer Antriebsseite und einer Werkzeugseite der Werkzeugmaschine.
Figur 3 illustriert einen Teil der Vorrichtung aus Fig. 2, wobei der Bearbeitungskopf (z.B. Schleifkopf) relativ zum Linearaktor mittels eines Kreuzgelenks verkippt ist.
Figur 4 enthält Seitenansichten der Vorrichtung aus Fig. 3.
Figuren 5 und 6 illustrieren ein weiteres Ausführungsbeispiel, bei dem eine Drehachse eines Bearbeitungskopfes gegenüber der Drehachse des Motors um rund 90° geneigt ist.
Figur 7 und 8 illustrieren ein weiteres Ausführungsbeispiel mit mehreren Bearbeitungsköpfen.
Figur 9 illustriert schematisch ein weiteres Beispiel, bei dem die Vorrichtung nicht an einem Manipulator montiert ist.

### DETAILLIERTE BESCHREIBUNG

Bevor verschiedene Ausführungsbeispiele der vorliegenden Erfindung im Detail erläutert werden, wird zunächst ein allgemeines Beispiel einer robotergestützten Schleifvorrichtung beschrieben. Es versteht sich, dass die hier beschriebenen Konzepte auch auf andere Arten von Oberflächenbearbeitung (z.B. Polieren) übertragbar und nicht auf Schleifen beschränkt ist. Im Folgenden werden Ausführungsbeispiele anhand einer Schleifmaschine mit rotierendem Schleifwerkzeug (Schleifscheibe) erläutert. Die hier beschriebenen Konzepte sind jedoch nicht darauf beschränkt und können auch bei anderen Werkzeugmaschinen angewendet werden, beispielsweise mit umlaufenden Werkzeugen (z.B. Bandschleifer) oder mit oszillierenden oder vibrierenden Werkzeugen (z.B. Schwingschleifer).

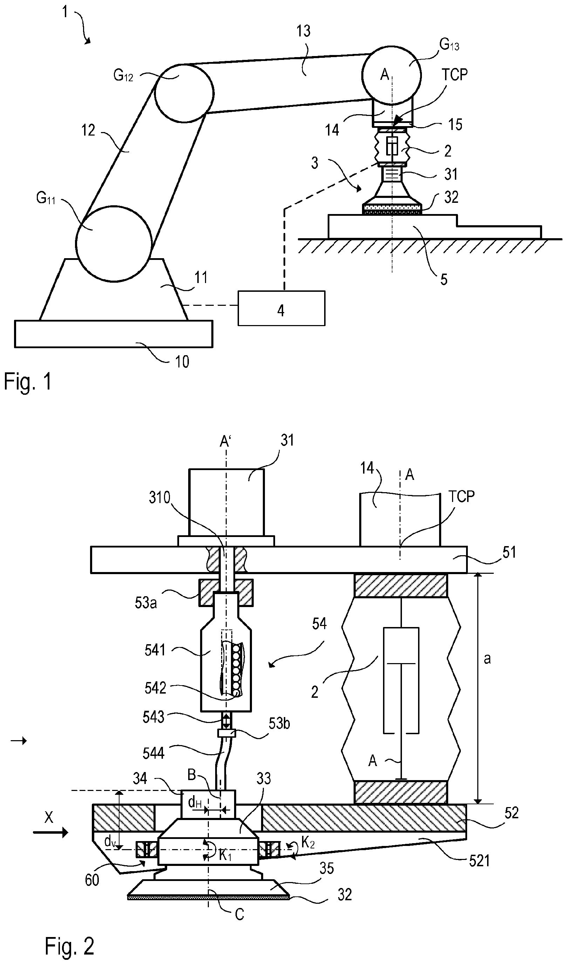

Gemäß Fig. 1 umfasst die Vorrichtung einen Manipulator 1, beispielsweise einen Industrieroboter und eine Schleifmaschine 3 mit rotierendem Schleifwerkzeug (z.B. eine Orbitalschleifmaschine), wobei dieser mit dem sogenannten *Tool-Center-Point* (TCP) des Manipulators 1 über einen Linearaktor 20 gekoppelt ist. Der TCP ist genau genommen kein Punkt, sondern ein Vektor und kann z.B. durch drei Raumkoordinaten und drei Winkel beschrieben werden. In der Robotik werden zur Beschreibung der Lage des TCPs manchmal auch generalisierte Koordinaten (meist sechs Gelenkwinkel des Roboters) im Konfigurationsraum verwendet. Position und Orientierung des TCPs werden manchmal auch als "Pose" bezeichnet. Die Position (inkl. Orientierung) des TCP als Funktion der Zeit definiert die Bewegung des Schleifwerkzeugs, die als Traj ektorie bezeichnet wird.

Im Falle eines Industrieroboters mit sechs Freiheitsgraden kann der Manipulator aus vier Segmenten aufgebaut sein, die jeweils über Gelenke verbunden sind. Das erste Segment 11 ist dabei meist starr mit einem Fundament 10 verbunden (was jedoch nicht zwangsläufig der Fall sein muss). Das Gelenk G₁₁ verbindet die Segmente 11 und 12. Das Gelenk G₁₁ kann 2-achsig sein und eine Drehung des Segments 12 um eine horizontale Drehachse (Elevationswinkel) und eine vertikale Drehachse (Azimutwinkel) ermöglichen. Das Gelenk G₁₂ verbindet die Segmente 13 und 12 und ermöglicht eine Schwenkbewegung des Segments 13 relativ zur Lage des Segments 12. Das Gelenk G₁₃ verbindet die Segmente 14 und 13. Das Gelenk G₁₃ kann 2-achsig sein und daher (ähnlich wie das Gelenk G₁₁) eine Schwenkbewegung in zwei Richtungen ermöglichen. Der TCP hat eine feste Relativposition zum Segment 14, wobei dieses üblicherweise noch ein Drehgelenk (nicht dargestellt) umfasst, welches eine Drehbewegung des am Segment 14 angeordneten Endeffektorflansches 15 um eine Längsachse A des Segments 14 ermöglicht (in Fig. 1 als strichpunktierte Line eingezeichnet, entspricht in dem dargestellten Beispiel auch der Drehachse des Schleifwerkzeugs). Jeder Achse eines Gelenks ist ein Aktor (z.B. ein Elektromotor) zugeordnet, der eine Drehbewegung um die jeweilige Gelenksachse bewirken kann. Die Aktoren in den Gelenken werden von einer Robotersteuerung 4 gemäß einem Roboterprogramm angesteuert. Verschiedene Industrieroboter/Manipulatoren und dazugehörige Steuerungen sind an sich bekannt und werden daher hier nicht weiter erläutert.

Der Manipulator 1 ist üblicherweise positionsgeregelt, d.h. die Robotersteuerung kann die Pose (Ort und Orientierung) des TCP festlegen und diesen entlang einer vordefinierten Trajektorie bewegen. In Fig. 1 ist die Längsachse des Segments 14, auf der der TCP liegt mit A bezeichnet. Wenn der Aktor 2 an einem Endanschlag anliegt, ist mit der Pose des TCP auch die Pose der Schleifmaschine 3 (und auch der Schleifscheibe 11) definiert. Wie eingangs bereits erwähnt, dient der Aktor 2 dazu, während des Schleifprozesses die Kontaktkraft (Prozesskraft) zwischen Werkzeug und Werkstück 5 auf einen gewünschten Wert einzustellen. Eine direkte Kraftregelung durch den Manipulator 1 ist für Schleifanwendungen in der Regel zu ungenau, da durch die hohe Massenträgheit der Segmente 11 bis 14 des Manipulators 1 eine schnelle Kompensation von Kraftspitzen (z.B. beim Aufsetzen des Schleifwerkzeugs auf das Werkstück 4) mit herkömmlichen Manipulatoren praktisch nicht möglich ist. Aus diesem Grund ist die Robotersteuerung 4 dazu ausgebildet, die Pose (Position und Orientierung) des TCP des Manipulators 1 zu regeln, während die Kraftregelung ausschließlich vom Aktor 2 bewerkstelligt wird.

Wie bereits erwähnt, kann während des Schleifprozesses die Kontaktkraft F_{K} zwischen Schleifwerkzeug (Schleifmaschine 3 mit Schleifscheibe 32) und Werkstück 5 mit Hilfe des Linear-Aktors 2 und einer Kraftregelung (die beispielsweise in der Steuerung 4 implementiert sein kann) so eingestellt werden, dass die Kontaktkraft F_{K} (in Richtung der Längsachse A) zwischen Schleifscheibe 32 und Werkstück 5 einem vorgebbaren Sollwert entspricht. Die Kontaktkraft F_{K} ist dabei eine Reaktion auf die Aktorkraft F_{A}, mit der der Linearaktor 2 auf die Werkstückoberfläche drückt. Bei fehlendem Kontakt zwischen Werkstück 5 und Werkzeug fährt der Aktor 2 aufgrund der fehlenden Kontaktkraft am Werkstück 5 gegen einen Endanschlag (nicht dargestellt da im Aktor 2 integriert) und drückt mit einer definierten Kraft gegen diesen. Die Kraftregelung ist dabei durchgehend aktiv. In dieser Situation (kein Kontakt) ist die Aktorauslenkung daher maximal und der Aktor 2 befindet sich in einer Endposition. Die definierte Kraft, mit der der Aktor 2 gegen den Endanschlag drückt kann sehr klein sein oder (theoretisch) sogar auf null geregelt werden, um ein möglichst sanftes Kontaktieren der Werkstückoberfläche zu ermöglichen.

Die Positionsregelung des Manipulators 1 (die ebenfalls in der Steuerung 4 implementiert sein kann) kann vollkommen unabhängig von der Kraftregelung des Aktors 2 arbeiten. Der Aktor 2 ist nicht verantwortlich für die Positionierung der Schleifmaschine 3, sondern lediglich für das Einstellen und Aufrechterhalten der erwünschten Kontaktkraft F_{K} während des Schleifprozesses und zur Erkennung von Kontakt zwischen Werkzeug 32 und Werkstück 5. Ein Kontakt kann z.B. in einfacher Weise dadurch erkannt werden, dass der Aktor sich aus der Endposition herausbewegt hat (Aktorauslenkung a ist kleiner als die maximale Auslenkung a_{MAX} am Endanschlag).

Der Aktor 2 kann ein pneumatischer Aktor sein, z.B. ein doppeltwirkender Pneumatikzylinder. Jedoch sind auch andere pneumatische Aktoren anwendbar wie z.B. Balgzylinder und Luftmuskel. Als Alternative kommen auch elektrische Direktantriebe (getriebelos) in Betracht. Es versteht sich, dass die Wirkrichtung des Aktors 2 und die Drehachse der Schleifmaschine 3 nicht notwendigerweise mit der Längsachse A des Segments 14 des Manipulators 1 zusammenfallen müssen. Im Falle eines pneumatischen Aktors kann die Kraftregelung in an sich bekannter Weise mit Hilfe eines Regelventils, eines Reglers (z.B. implementiert in der Steuerung 4) und eines Druckluftspeichers oder Kompressors realisiert werden. Da für die Berücksichtigung der Schwerkraft (d.h. der Gewichtskraft der Schleifmaschine 3) die Neigung zur Lotrechten relevant ist, kann der Aktor 2 einen Neigungssensor enthalten oder diese Information kann basierend auf den Gelenkwinkeln des Manipulators 1 ermittelt werden. Die ermittelte Neigung wird von dem Kraftregler berücksichtigt. Die konkrete Implementierung der Kraftregelung ist an sich bekannt und für die weitere Erläuterung nicht wichtig und wird daher auch nicht detaillierter beschrieben.

Die Schleifmaschine 3 hat üblicherweise einen Elektromotor, der die Schleifscheibe 32 antreibt. Bei einer Orbitalschleifmaschine - sowie auch bei anderen Typen von Schleifmaschinen - ist die Schleifscheibe 32 an einer Trägerplatte (*backing pad*) montiert, die wiederum mit der Motorwelle des Elektromotors verbunden ist. Als Elektromotoren kommen Asynchronmotoren oder Synchronmotoren in Betracht. Synchronmotoren haben den Vorteil, dass sich die Drehzahl nicht mit der Belastung ändert (sondern lediglich der Schlupfwinkel), wohingegen bei Asynchronmaschinen die Drehzahl bei steigender Belastung sinkt. Die Belastung des Motors ist dabei im Wesentlichen proportional zur Kontaktkraft F_{K} und der Reibung zwischen der Schleifscheibe 32 und der zu bearbeitenden Oberfläche des Werkstücks 5.

Alternativ zu Schleifmaschinen mit elektrischem Antrieb können auch Schleifmaschinen mit pneumatischem Motor (Druckluftmotor) verwendet werden. Mit Druckluft betriebene Schleifmaschinen können relativ kompakt gebaut werden, da Druckluftmotoren in der Regel ein geringes Leistungsgewicht aufweisen. Eine Drehzahlregelung ist mittels eines (z.B. von der Steuerung 4 elektrisch angesteuertes) Druckregelventils einfach möglich (zusätzlich oder alternativ auch mittels einer Drossel), wohingegen bei Synchron- und Asynchronmotoren (z.B. von der Steuerung 4 elektrisch angesteuerte) Frequenzumrichter für die Drehzahlsteuerung benötigt werden. Die hier beschriebenen Konzepte können mit einer Vielzahl unterschiedlicher Arten von Schleifmaschinen, Poliermaschinen und anderen Maschinen zur Oberflächenbearbeitung implementiert werden.

Insbesondere bei Schleifmaschinen, die einen Elektromotor enthalten, kann der Elektromotor einen erheblichen Teil des Gewichts ausmachen. In den nachfolgenden Beispielen wird der Aktor 2 nicht nur dazu verwendet, den Manipulator 1 vom Werkstück mechanisch zu entkoppeln, sondern auch dazu, den Motor der Schleifmaschine vom Bearbeitungskopf (*working head*), an dem die Schleifscheibe montiert ist, mechanisch zu entkoppeln. Der Bearbeitungskopf wird im Fall einer Schleifmaschine als Schleifkopf (*sanding head*) bezeichnet. Des Weiteren erlauben manche der folgenden Ausführungsbeispiele eine Kompensation (innerhalb gewisser Grenzen) einer ungenauen Positionierung der Schleifmaschine relativ zur Werkstückoberfläche, was den Aufwand bei der Erstellung der Roboterprogramme reduzieren kann.

Gemäß dem in Fig. 2 dargestellten Beispiel weist die Werkzeugmaschine 3 eine erste Trägerplatte 51 und eine zweite Trägerplatte 52 auf. Die erste Trägerplatte 51 ist so ausgeführt, dass sie an einem Manipulator 1 montiert werden kann, beispielsweise an dem Endeffektorflansch 15 des Manipulators 1 aus Fig. 1. An der zweiten Trägerplatte 52 ist ein Schleifkopf 33 gelagert, der später noch genauer beschrieben wird. Im Betrieb kann an einer rotierbaren Trägerplatte 35 (*backingpad*) des Schleifkopfes 33 eine Schleifscheibe 32 montiert sein. Zwischen den beiden Trägerplatten 51 und 52 ist ein Linearaktor 2 angeordnet. Der Linearaktor 2 wirkt zwischen den beiden Trägerplatten 51 und 52, sodass der Abstand a zwischen den beiden Trägerplatten 51 und 52 von der Auslenkung des Linearaktors 2 abhängt. Der Linearaktor 2 wird im Normalbetrieb wie oben beschrieben kraftgeregelt betrieben, sodass die Aktorkraft zwischen den beiden Trägerplatten 51 und 52 wirkt. Wenn das Werkzeug 32 keinen Kontakt zu einer Oberfläche hat, drückt der Linearaktor 2 mit einer Soll-Aktorkraft gegen einen Endanschlag des Aktors 2 (nicht dargestellt). Der Aktor 2 kann ein pneumatischer Linearaktor sein und beispielsweise einen doppeltwirkenden Pneumatikzylinder beinhalten. Jedoch können auch andere Aktoren verwendet werden. An dieser Stelle sei erwähnt, dass die Trägerplatten 51 und 52 nicht notwendigerweise ebene Platten sind, sondern eine beliebige tragende Struktur darstellen oder Teil einer solchen tragenden Struktur sein können. Die Trägerplatten 51 und 52 sind auch nicht notwendigerweise aus einem Stück gefertigt, sondern können aus mehreren Teilen zusammengesetzt sein.

Der Schleifkopf 33 (*grinding head, sanding head*) kann praktisch als Schleifmaschine ohne Antrieb (Motor) betrachtet werden. Der Schleifkopf 33 umfasst eine Antriebswelle (mit Drehachse C), die direkt oder indirekt die Trägerplatte 35 antreibt, auf der die Schleifscheibe 32 angeordnet ist. Der Schleifkopf 33 kann auch ein Getriebe beinhalten, das eine exzentrische Rotation der Trägerplatte 35 bewirkt, wie das bei Orbitalschleifern üblich ist. Ein Beispiel eines Schleifkopfes ist z.B. in der Publikation EP 0237854 A2 (entspricht US 4759152) gezeigt und wird daher hier nicht weiter erläutert.

Ein Motor 31 (z.B. ein Elektromotor) für den Antrieb der Trägerscheibe 35 des Schleifkopfs 33 ist gemäß den hier beschriebenen Ausführungsbeispielen an der ersten Trägerplatte 51 montiert. Gemäß dem Beispiel aus Fig. 2 kann der Motor 31 an der ersten Trägerplatte 51 montiert sein, wobei die Motorwelle 310 durch die erste Trägerplatte 51 hindurchgeführt ist. Der Abstand zwischen den beiden Trägerplatten 51 und 52 wird durch eine flexible Welle 544 und die Teleskopwelle 54 "überbrückt", wobei die Teleskopwelle 54 optional ist. Das heißt, die Motorwelle 310 ist mit der Antriebswelle (Drehachse C) des Schleifkopfes 33 über die flexible Welle 544 gekoppelt und treibt diese an. Damit die flexible Welle 544 nicht so stark gebogen wird, kann die Motorwelle 310 mit einem Ende der Teleskopwelle 54 gekoppelt sein (Wellenkupplung 53a) und das andere Ende der Teleskopwelle 54 mit der flexiblen Welle 544 gekoppelt sein (Wellenkupplung 53b). Die flexible Welle 544 treibt die Antriebswelle (Drehachse C) des Schleifkopfes 33 entweder direkt an oder - wie in Fig. 2 dargestellt - über ein Getriebe 34. Die Antriebswelle (*input shaft*) des Getriebes 34 hat eine Drehachse die in Fig. 2 mit B bezeichnet ist. Die flexible Welle 544 ist biegsam (d.h. die Längsachse der Welle ist gekrümmt mit variabler Krümmung) und unterscheidet sich von herkömmlichen Gelenkwellen, die zwei oder mehr starre Wellenteile aufweisen, die über ein (Kardan-) Gelenk verbunden sind.

Die Teleskopwelle 54 umfasst zwei Wellenteile (Hohlwelle/Hülse 541, verschiebbarer Wellenteil 543), die relativ zueinander verschiebbar sind. Ein erster Teil der beiden Wellenteile ist mit der Motorwelle 33 des Motors 31 gekoppelt (beispielsweise mittels der Wellenkupplung 53a), und ein zweiter Teil der beiden Wellenteile ist mit der flexiblen Welle 544 verbunden (beispielsweise mittels der Wellenkupplung 53b).

Der zweite Wellenteil 543 der Teleskopwelle 54 ist relativ zum ersten Wellenteil (Hohlwelle 541) entlang der Drehachse der Teleskopwelle 54 verschiebbar. Dazu kann die Hohlwelle 541 (erster Wellenteil) eine Linearführung 542 beinhalten, die eine Verschiebung des zweiten Wellenteils 543 entlang der Drehachse der Teleskopwelle 54 ermöglicht. Wie erwähnt ist die Teleskopwelle 54 optional. Ohne Teleskopwelle kann es je nach Anwendung vorkommen, dass die flexible Welle 544 stärker auf Biegung beansprucht wird als in den Fällen, in denen zusätzlich eine Teleskopwelle 54 zum Einsatz kommt.

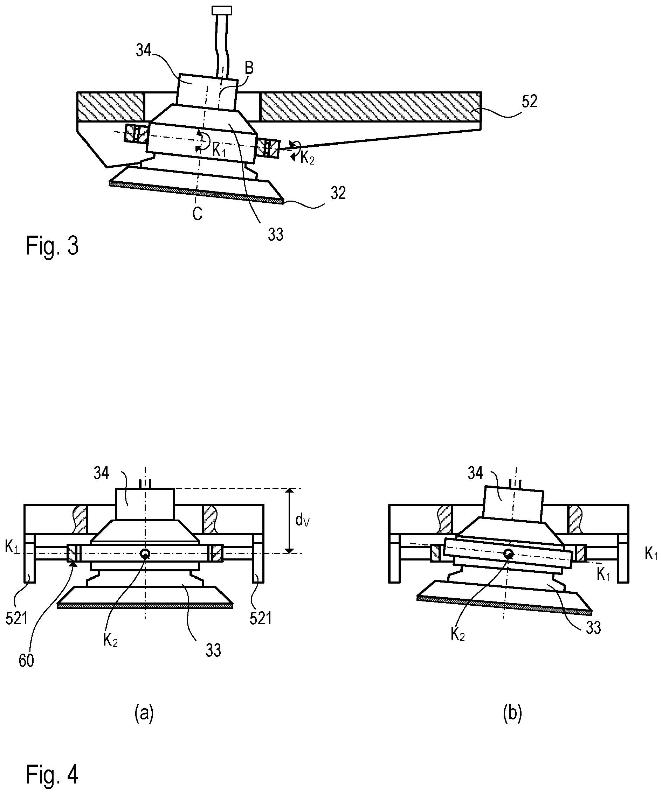

In dem Beispiel aus Fig. 2 ist der Schleifkopf 33 mittels eines Kreuzgelenks 60 an der Trägerplatte 52 gelagert um eine zweiachsige Kippbewegung des Schleifkopfs 33 (relativ zur Trägerplatte 52) zu ermöglichen. Die zweiachsige Kippbewegung wird durch ein Kippen um eine erste Kippachse Ki und eine zweite Kippachse K₂ ermöglicht. Fig. 3 zeigt den unteren Teil der Vorrichtung aus Fig. 2 (Trägerplatte 52 mit Kreuzgelenk 60 und Schleifkopf 33), wobei der Schleifkopf 33 um die Kippachse Ki gekippt ist. Fig. 4 zeigt eine Seitenansicht X des unteren Teils der Vorrichtung aus Fig. 2, wobei in Diagramm (a) der Fig. 4 der Schleifkopf 33 in seiner Normalposition ist und in Diagramm (b) der Fig. 4 der Schleifkopf 33 um die die Kippachse K₂ gekippt ist. Das Kreuzgelenk kann an zwei seitlichen Schenkeln 521 und 522 der Trägerplatte 52 gelagert werden. Ein Kreuzgelenk als Mittel zur kardanischen Aufhängung (*gimbal suspension*) ist an sich bekannt und wird daher hier nicht näher erläutert.

An dieser Stelle sei jedoch angemerkt, dass bei einer Verkippung des Schleifkopfes 33 auch die Drehachsen B und C verkippt werden (siehe Fig. 2). Diese Verkippung der Drehachsen B und C kann jedoch durch eine entsprechende Biegung der flexiblen Welle 544 ausgeglichen werden. Des Weiteren sei angemerkt, dass die Kippachsen K₁ und K₂ des Kreuzgelenks 60 (im normalen, unverkippten Zustand) in einer Ebene liegen, die unterhalb jener Ebene ist, in der sich das untere Ende der flexiblen Welle befindet. Der vertikale Abstand zwischen den Kippachsen K₁ und K₂ und dem unteren Ende der flexiblen Welle 544 ist in Fig. 2 mit dᵥ bezeichnet. Des Weiteren ist das untere Ende der flexiblen Welle 544 koaxial zur Drehachse B, die in horizontaler Richtung von der Drehachse C des Schleifwerkzeugs, beabstandet ist (horizontaler Abstand d_{H}). Im allgemeinen ist es wünschenswert das Kreuzgelenk 60 in möglichst geringem Abstand zu der Schleifscheibe 32 anzuordnen, sodass die Kippachsen K₁ und K₂ möglichst weit unten liegen.

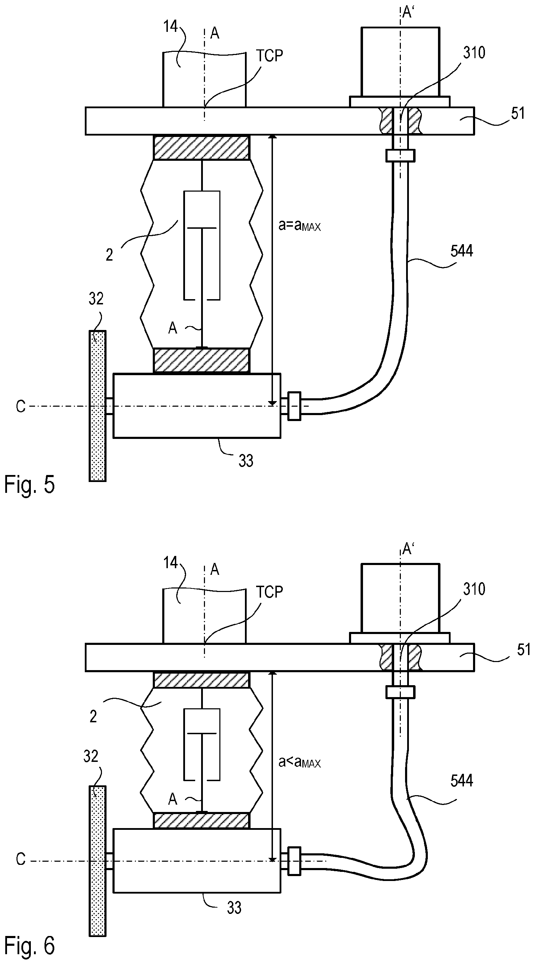

Das in Fig. 5 und 6 dargestellte Ausführungsbeispiel zeigt eine Schleifvorrichtung, bei der die Schleifscheibe 32 um eine Drehachse C rotiert, die nicht koaxial zur Motorwelle 310 (Drehachse A') ist. In dem dargestellten Beispiel steht die Drehachse A` der Motorwelle 310 im rechten Winkel auf die horizontale Ebene, in der die Drehachse C der Schleifscheibe 32 liegt. Die flexible Welle 544, welche die Motorwelle 310 und die Antriebswelle (Drehachse C) des Schleifkopfs 33 verbindet, ist in diesem Fall um rund 90° gebogen. Um die maximale Biegung der flexiblen Welle 544 zu reduzieren, kann auch in diesem Fall eine Teleskopwelle zwischen der Motorwelle 310 und der flexiblen Welle 544 angeordnet sein (vgl. Fig. 2).

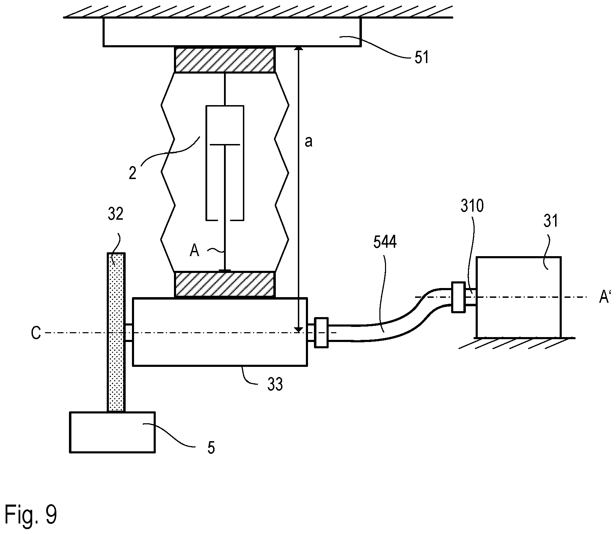

Der Aktor 2 koppelt den Schleifkopf 33 mit der oberen Trägerplatte 51. Der Abstand a zwischen der Drehachse C der Schleifscheibe 32 und der Trägerplatte 51 hängt von der Auslenkung des Aktors 2 ab. Die untere Trägerplatte 52 (vgl. Fig. 2) ist in diesem Beispiel nicht notwendig (je nach Ausgestaltung des Schleifkopfes 53). Fig. 6 zeigt die Vorrichtung bei maximaler Auslenkung des Aktors 2 (Abstand a=a_{MAX}), wobei die Auslenkung des Aktors in dieser Situation durch seinen Endanschlag begrenzt wird. Fig. 6 zeigt die Vorrichtung mit einer kleineren Auslenkung des Aktors 2 (a<a_{MAX}), wie es z.B. der Fall ist, wenn die Schleifscheibe 32 eine Oberfläche berührt. An dieser Stelle sei darauf hingewiesen, dass die Trägerplatte 51 nicht notwendigerweise an einem Manipulator montiert sein muss, sondern auch ortsfest gelagert sein kann. In diesem Fall kann das Werkstück z.B. mittels eines Manipulators relativ zum Bearbeitungswerkzeug 32 positioniert werden. In diesem Zusammenhang wird auch auf das Beispiel aus Fig. 9 verwiesen.

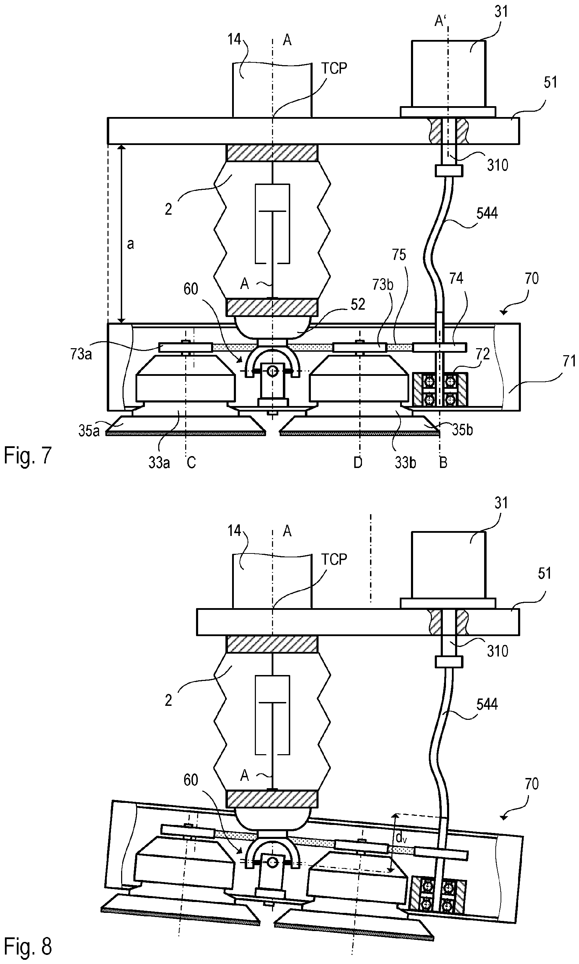

Fig. 7 und 8 zeigen ein weiteres Ausführungsbeispiel mit mehreren Schleifköpfen 33a, 33b, die ähnlich wie das Beispiel aus Fig. 2 um zwei Achsen verkippt werden können. Der obere Teil der in Fig. 7 dargestellten Vorrichtung (Trägerplatte 51, Motor 31, Aktor 2) ist gleich wie bei dem Beispiel aus Fig. 2 und 6 und es wird auf die obigen Erläuterungen verwiesen. Statt eines einzelnen Schleifkopfes 33 weist die Vorrichtung aus Fig. 7 jedoch eine Baugruppe 70 mit zwei oder mehr Schleifköpfen 33a, 33b aus. Die gesamte Baugruppe 70 ist mittels eines Kreuzgelenks 60 mit dem Aktor 2 gekoppelt. In dem in Fig. 7 dargestellten Beispiel ist ein Ende des Kreuzgelenks 60 an einer Trägerplatte 52 montiert, die wiederum starr mit dem unteren Ende des Aktors 2 verbunden ist. Das andere Ende des Kreuzgelenks 60 ist an einem Gehäuse 71 der Baugruppe 70 montiert. Auch in diesem Beispiel liegt der Schnittpunkt der Kippachsen des Kreuzgelenks 60 in einem vertikalen Abstand dᵥ unterhalb des unteren Endes der flexiblen Welle 544; auch in diesem Beispiel ist es wünschenswert, das Kreuzgelenk 60 möglichst weit unten anzuordnen. Da es im Gegensatz zu dem Beispiel aus Fig. 2 bei mehreren Schleifköpfen möglich ist, das Kreuzgelenk 60 zwischen den Schleifköpfen anzuordnen, kann das Gelenk einfacher ausgestaltet sein und es ist keine kardanische Aufhängung (*gimbal suspension*) wie in Fig. 2 nötig.

In dem Gehäuse 71 sind mehrere Schleifköpfe 33a, 33b so angeordnet, dass die rotierbaren Trägerplatten 35a bzw. 35b unten aus dem Gehäuse 71 der Baugruppe 70 herausragen. In dem vorliegenden Beispiel sind die Drehachsen der Antriebswellen der Schleifköpfe 33a und 33b mit C bzw. D bezeichnet. An der Antriebswelle des Schleifkopfes 33a ist eine Riemenscheibe 73a montiert, an der Antriebswelle des Schleifkopfes 33b ist eine Riemenscheibe 73b. In einem speziellen Ausführungsbeispiel ist (in Fig. 7 und 8 nicht dargestellter) ein dritter Schleifkopf 33c mit einer Riemenscheibe 73c vorgesehen, wobei die Drehachsen der drei Schleifköpfe in Bezug auf die Längsachse A des Aktors 2 um je 120° versetzt angeordnet sind. An dieser Stelle sei angemerkt, dass statt eines Riementriebs auch ein beliebiges anderes Getriebe (z.B. ein Zahnradgetriebe) verwendet werden kann. Das Getriebe, wie in den hier beschriebenen Beispielen der Riementrieb, dient zur Übertragung der mechanischen Leistung. Wie diese Übertragung der mechanischen Leistung konkret implementiert ist, ist nicht von spezieller Relevanz.

In dem Gehäuse 71 der Baugruppe 70 ist eine weitere Welle (Drehachse B) gelagert (siehe Fig. 7, Lager 72), die durch die flexible Welle 544 mit der Motorwelle 310 verbunden ist. An der Welle mit Drehachse B ist eine weitere Riemenscheibe 74 montiert, und ein Riemen 75 verbindet die Riemenscheibe 74 (angetrieben von dem Motor 31 über die flexible Welle 544) mit den Riemenscheiben 73a, 73b (und ggf. 73c), sodass über den Riemen die Antriebswellen aller Schleifköpfe 33a, 33b (und ggf. 33c) angetrieben werden. Der vertikale Abstand a zwischen der Baugruppe 70 (in nicht verkippter Normalposition wie in Fig. 7 dargestellt) und der oberen Trägerplatte 51 hängt von der Auslenkung des Aktors 2 ab. Sowohl eine Veränderung des Abstandes a als auch eine Verkippung der Baugruppe 70 kann von der flexiblen Welle 544 ausgeglichen werden. Fig. 8 zeigt die Vorrichtung aus Fig. 7 mit verkippter Baugruppe 70.

Fig. 9 illustriert ein weiteres Ausführungsbeispiel, bei dem die Vorrichtung nicht an einem Manipulator montiert ist sondern ortsfest gelagert ist. In diesem Fall kann das Werkstück mittels eines Manipulators relativ zur Schleifscheibe positioniert werden. Gemäß Fig. 9 ist die Trägerplatte 51 ortsfest montiert. Die Trägerplatte 51 kann in diesem Beispiel als Teil einer beliebigen tragenden Struktur angesehen werden (dies gilt für alle Ausführungsbeispiele) oder an einer beliebigen tragenden Struktur montiert sein. Als tragende Struktur kommen z.B. ein Gehäuse, ein Stativ, usw. in Betracht. Die Trägerplatte 51 kann auch als Teils des Aktors 2 gesehen werden (auch dies gilt für alle Ausführungsbeispiele). Ähnlich wie in dem Beispiel aus Fig. 5 koppelt der Aktor 2 direkt oder indirekt die Trägerplatte 51 mit einem Bearbeitungskopf 33 (Schleifkopf), der im einfachsten Fall eine drehbar gelagerte Welle enthält, an der das Bearbeitungswerkzeug wie z.B. die Schleifscheibe 32 montiert ist. Während des Bearbeitungsprozesses wird das Werkstück 5 positioniert (z.B. mittels eines Manipulators) und der Aktor 2 sorgt wie oben beschrieben für die Regelung der Kontaktkraft oder drückt, sofern kein Kontakt zum Werkstück besteht, mit definierter (mittels Kraftregelung eingestellter) Kraft gegen einen Endanschlag.

In dem Beispiel aus Fig. 9 ist der Motor 31 ebenfalls stationär montiert (z.B. an derselben tragenden Struktur wie der Aktor 2) und hat damit eine variable Relativposition zu dem Schleifkopf 33, welche über eine flexible Welle 544 ausgeglichen werden kann (in gleicher Weise wie bei den anderen hier beschriebenen Ausführungsbeispielen). An dieser Stelle sei angemerkt, dass auch die oben beschriebenen Ausführungsbeispiele, bei denen der (mindestens ein) Schleifkopf mittels einer kardanischen Aufhängung oder eines Kreuzgelenks verkippbar am Aktor gelagert ist, stationär betrieben werden können, während das Werkstück mittels eines Manipulators positioniert wird.

Im Folgenden werden einige Aspekte der hier beschriebenen Ausführungsbeispiele zusammengefasst, wobei es sich lediglich um eine exemplarische, jedoch keine vollständige Zusammenfassung der relevanten technischen Merkmale handelt. Die Ausführungsbeispiele betreffen eine Vorrichtung zum robotergestützten Bearbeiten von Oberflächen. Gemäß einem allgemeinen Ausführungsbeispiel weist die Vorrichtung eine Trägerplatte zur Montage der Vorrichtung an einem Manipulator (siehe z.B. Fig. 2, 5 und 7, Trägerplatte 51), einen Motor, einen Linearaktor, und (mindestens) einen Bearbeitungskopf (siehe z.B. Fig. 2, 5, Schleifkopf 33 oder Fig. 7, Schleifköpfe 33a, 33b) auf. Der Bearbeitungskopf ist (unmittelbar oder mittelbar) mittels des Linearaktors mit der Trägerplatte gekoppelt und weist eine Antriebswelle (siehe z.B. Fig. 2, Drehachse B, Fig. 5 und 7, Drehachse C) zum direkten oder indirekten Antreiben eines rotierbaren Werkzeugs auf. Die Vorrichtung weist weiter eine flexible Welle auf, die eine Motorwelle des Motors mit der Antriebswelle des Bearbeitungskopfs direkt oder indirekt (z.B. über eine zusätzliche Teleskopwelle) koppelt.

Wie erwähnt, muss die Trägerplatte nicht notwendigerweise an einem Manipulator montiert sein. Alternativ kann auch das zu bearbeitende Werkstück von einem Manipulator positioniert werden; in diesem Fall ist die Trägerplatte ortsfest, beispielsweise Teil eines Gehäuses, eines Stativs oder einer anderen tragenden Struktur. Der Motor kann an der gleichen Trägerplatte montiert sein wie der Aktor. Dies ist jedoch aufgrund der flexiblen Welle nicht notwendig. Wie bereits erwähnt sind die Trägerplatten nicht notwendigerweise ebene Platten, sondern können eine beliebige tragende Struktur darstellen.

In einigen Ausführungsbeispielen wird ein Kreuzgelenk verwendet, um den (mindestens einen) Bearbeitungskopf mit dem Linearaktor mechanisch zu koppeln. In diesem Fall wird eine zweiachsige Verkippung des Bearbeitungskopfs ermöglicht. Im dem Beispiel aus Fig. 2-4 wird das Kreuzgelenk durch eine kardanische Aufhängung realisiert, in dem Beispiel aus Fig. 7 und 8 wird ein einfaches Kreuzgelenk (Kardangelenk) verwendet. Je nach Anwendung kann es möglich sein, das Kreuzgelenk durch ein einachsiges Gelenk zu ersetzen, sodass nur eine Kippung um eine Kippachse möglich ist.

Gemäß den hier beschriebenen Ausführungsbeispielen weist die Vorrichtung eine Trägerstruktur auf, die an einem Ende des Linearaktors montiert ist, wohingegen das andere Ende des Linearaktors an der Trägerplatte montiert ist. Das Kreuzgelenk kann wie erwähnt eine kardanische Aufhängung bilden, mittels der der Bearbeitungskopf an der Trägerstruktur gelagert ist. Die Trägerstruktur kann im einfachsten Fall eine weitere Trägerplatte sein (siehe z.B. Fig. 2-4, Grundplatte 52 mit seitlichen Schenkeln 521, 522). Die Trägerstruktur kann eine Öffnung aufweisen, durch die der Bearbeitungskopf oder die flexible Welle hindurchgeführt ist (siehe. Fig. 3, Schleifscheibe 32 ist unterhalb der Trägerplatte 52 und die flexible Welle ist oberhalb der Trägerplatte 52 mit dem Schleifkopf 33 gekoppelt). Die zwei Kippachsen des Kreuzgelenks sind von einer Oberseite des Bearbeitungskopfs beabstandet (siehe Fig. 2, Abstand dᵥ) und verlaufen durch den Bearbeitungskopfs hindurch. Dadurch wird erreicht, dass die Kippachsen vergleichsweise nahe am Werkstück liegen und somit ein Verkanten (*catching of an edge*) des Schleifkops während des Schleifprozesses verhindert wird. In dem Beispiel aus Fig. 2 schneiden sich die beiden Kippachsen und eine Drehachse des Schleifkopfs in einem Punkt. Der Bearbeitungskopf kann ein Getriebe aufweisen (siehe Fig. 3, Getriebe 34), sodass eine Drehachse des rotierbaren Werkzeugs und eine Drehachse der Antriebswelle axial versetzt sind (siehe Fig. 2, Abstand d_{H}).

Gemäß manchen Ausführungsbeispielen sind an der Trägerstruktur mehrere Bearbeitungsköpfe montiert und die Trägerstruktur ist über ein Kreuzgelenk mit dem Linearaktor gekoppelt. Dies ist z.B. in dem Beispiel aus Fig. 7 der Fall, bei dem die Trägerstruktur durch eine Gehäuse 71 einer Baugruppe 70 gebildet wird. Das Kreuzgelenk ermöglicht eine Kippung um zwei Kippachsen, die sich gemäß einem speziellen Ausführungsbeispiel in einem Schnittpunkt schneiden können, durch den auch die Längsachse des Aktors verläuft. Das Kreuzgelenk ist innerhalb des Gehäuses der Baugruppe angeordnet, und die Schleifköpfe sind um das Kreuzgelenk herum angeordnet. Beispielsweise können drei Schleifköpfe jeweils um 120° versetzt (in Bezug auf die Längsachse des Aktors und des Gelenks) um das Kreuzgelenk herum angeordnet sein. Die Kippachsen des Kreuzgelenks liegen in einer Ebene, die durch die Schleifköpfe hindurch verläuft und somit möglichst nahe an der Werkstückoberfläche liegt.

An der Trägerstruktur (z.B. dem Gehäuse 71, siehe Fig. 7) ist mittels eines Lagers eine Welle montiert, die mit der flexiblen Welle verbunden ist und somit vom Motor angetrieben werden kann. Diese Welle ist über ein Getriebe, wie beispielsweise einen Riementrieb mit den Antriebswellen der Schleifköpfe verbunden.

Ganz allgemein ermöglicht die flexible Welle die Ankopplung des Motors an die Schleifköpfe, auch wenn die Relativposition der Schleifköpfe zum Motor variabel ist. Veränderungen der Relativposition können durch die flexible Welle ausgeglichen werden. Die Drehachsen von Motorwelle und Schleifkopf müssen nicht parallel sein, und können sogar einen Winkel von annähernd 90° einschließen (siehe Fig. 5). Um eine übermäßige Biegung der flexiblen Welle zu vermeiden kann diese mit einer Teleskopwelle kombiniert werden (siehe Fig. 2).

## Patentansprüche

1. Eine Vorrichtung, die aufweist:
eine Trägerplatte (51);
einen Motor (31);
einen Linearaktor (2); und
einen Bearbeitungskopf (33; 33a, 33b), der mittels des Linearaktors (2) mit der Trägerplatte (51) gekoppelt ist, wobei der Bearbeitungskopf (33; 33a, 33b) eine Antriebswelle zum direkten oder indirekten Antreiben eines rotierbaren Werkzeugs (32) aufweist;
**gekennzeichnet durch**
eine flexible Welle (544), die eine Motorwelle (310) des Motors (31) mit der Antriebswelle des Bearbeitungskopfs (33; 33a, 33b) koppelt; und
ein Gelenk (60), das den Bearbeitungskopf (33; 33a, 33b) und den Linearaktor (2) derart mechanisch koppelt, dass eine einachsige oder eine zweiachsige Verkippung des Bearbeitungskopfs (33; 33a, 33b) ermöglicht wird.

2. Die Vorrichtung gemäß Anspruch 1:
wobei das Gelenk als ein Kreuzgelenk (60) ausgebildet ist, das den Bearbeitungskopf (33; 33a, 33b) und den Linearaktor (2) derart mechanisch koppelt, dass eine zweiachsige Verkippung des Bearbeitungskopf (33; 33a, 33b) ermöglicht wird.

3. Die Vorrichtung gemäß Anspruch 2, die weiter aufweist:
eine Trägerstruktur (52), die mit einem Ende des Linearaktors (2) verbunden ist, wobei das andere Ende des Linearaktors (2) mit der Trägerplatte (51) verbunden ist,
wobei das Kreuzgelenk (60) eine kardanische Aufhängung bildet, mittels der der Bearbeitungskopf (33) an der Trägerstruktur (52) gelagert ist.

4. Die Vorrichtung gemäß Anspruch 3,
wobei das Kreuzgelenk (60) eine Kippung um zwei Kippachsen (K₁, K₂) ermöglicht, die von einer Oberseite des Bearbeitungskopfs (33) beabstandet durch den Bearbeitungskopfs (33) hindurch verlaufen.

5. Die Vorrichtung gemäß Anspruch 3 oder 4,
wobei die Trägerstruktur (52) eine Grundplatte und zwei einander gegenüber liegende Schenkel (521, 522) aufweist und
wobei der Bearbeitungskopf (33) über die kardanische Aufhängung an den beiden Schenkeln (521, 522) gelagert ist.

6. Die Vorrichtung gemäß Anspruch 5,
wobei die Trägerstruktur eine Öffnung aufweist, durch die der Bearbeitungskopf (33) oder die flexible Welle (544) hindurchgeführt ist.

7. Die Vorrichtung gemäß einem der Ansprüche 1 bis 6,
wobei der Bearbeitungskopf (33) ein Getriebe (34) aufweist, sodass eine Drehachse (C) des rotierbaren Werkzeugs (32) und eine Drehachse (B) der Antriebswelle axial versetzt sind.

8. Die Vorrichtung gemäß Anspruch 2, die weiter aufweist:
eine Trägerstruktur (71), die mit einem Ende des Linearaktors (2) über das Kreuzgelenk (60) verbunden ist, wobei das andere Ende des Linearaktors (2) mit der Trägerplatte (51) verbunden ist, und
wobei ein oder mehrere Bearbeitungsköpfe (33a, 33b) an der Trägerstruktur (71) montiert sind.

9. Die Vorrichtung gemäß Anspruch 8,
wobei das Kreuzgelenk (60) eine Kippung um zwei Kippachsen (K₁, K₂) ermöglicht und wobei die Kippachsen (K₁, K₂) an einem Schnittpunkt schneiden, durch den auch eine Längsachse (A) des Aktors (2) verläuft.

10. Die Vorrichtung gemäß Anspruch 8 oder 9,
wobei an der Trägerstruktur (71) zwei oder mehr Bearbeitungsköpfe (33a, 33b) montiert sind und wobei die Bearbeitungsköpfe (33a, 33b) um das Kreuzgelenk (60) herum angeordnet sind.

11. Die Vorrichtung gemäß Anspruch 9 oder 10,
wobei die Kippachsen (K₁, K₂) in einer Ebene liegen, die durch die Bearbeitungsköpfe verläuft.

12. Die Vorrichtung gemäß einem der Ansprüche 8 bis 11,
wobei an der Trägerstruktur mittels eines Lagers (72) eine Welle montiert ist, die mit der flexiblen Welle (544) verbunden ist und die über ein Getriebe die Antriebswellen der Bearbeitungsköpfe (33a, 33b) antreibt.

13. Die Vorrichtung gemäß Anspruch 12,
wobei das Getriebe ein Riementrieb oder ein Zahnradgetriebe ist.

14. Die Vorrichtung gemäß einem der Ansprüche 1 bis 13,
wobei die Motorwelle (310) des Motors (31) und die Antriebswelle des Bearbeitungskopfs (33; 33a, 33b) über die flexible Welle (544) und eine Teleskopwelle miteinander gekoppelt sind.

## Claims

1. A device, comprising:
a support plate (51);
a motor (31);
a linear actuator (2); and
a machining head (33; 33a, 33b) which is coupled to the support plate (51) by means of the linear actuator (2), the machining head (33; 33a, 33b) comprising a drive shaft for directly or indirectly driving a rotatable tool (32);
**characterized by**
a flexible shaft (544) coupling a motor shaft (310) of the motor (31) to the drive shaft of the machining head (33; 33a, 33b); and
a joint (60) that mechanically couples the machining head (33; 33a, 33b) and the linear actuator (2) to enable one-axis or a two-axis tilting of the machining head (33; 33a, 33b).

2. The device according to claim 1,
wherein the joint is designed as a universal joint (60) that mechanically couples the processing head (33; 33a, 33b) and the linear actuator (2) to enable two-axis tilting of the machining head (33; 33a, 33b).

3. The device according to claim 2, further comprising:
a support structure (52) connected to one end of the linear actuator (2), the other end of the linear actuator (2) being connected to the support plate (51),
wherein the universal joint (60) forms a gimbal suspension by means of which the machining head (33) is mounted on the support structure (52).

4. The device according to claim 3,
wherein the universal joint (60) enables tilting about two tilting axes (K₁, K₂) which extend through the machining head (33) spaced apart from a top side of the machining head (33).

5. The device according to claim 3 or 4,
wherein the support structure (52) comprises a base plate and two opposing legs (521, 522), and
wherein the machining head (33) is mounted on the two legs (521, 522) via the gimbal suspension.

6. The device according to claim 5,
wherein the support structure comprises an opening through which the machining head (33) or the flexible shaft (544) is guided.

7. The device according to any one of claims 1 to 6,
wherein the machining head (33) comprises a gear (34) so that a rotation axis (C) of the rotatable tool (32) and a rotation axis (B) of the drive shaft are axially offset.

8. The device according to claim 2, further comprising:
a support structure (71) connected to one end of the linear actuator (2) via the universal joint (60), the other end of the linear actuator (2) being connected to the support plate (51), and
wherein one or more machining heads (33a, 33b) are mounted on the support structure (71).

9. The device according to claim 8,
wherein the universal joint (60) enables tilting about two tilting axes (K₁, K₂) and wherein the tilting axes (K₁, K₂) intersect at an intersection point through which a longitudinal axis (A) of the actuator (2) passes as well.

10. The device according to claim 8 or 9,
wherein two or more machining heads (33a, 33b) are mounted on the support structure (71) and wherein the machining heads (33a, 33b) are arranged around the universal joint (60).

11. The device according to claim 9 or 10,
wherein the tilting axes (K₁, K₂) are located in a plane that passes through the machining heads.

12. The device according to any one of claims 8 to 11,
wherein a shaft is mounted on the support structure by means of a bearing (72) that is connected to the flexible shaft (544) and that drives the drive shafts of the machining heads (33a, 33b) via a transmission.

13. The device according to claim 12,
wherein the transmission is a belt drive or a gear drive.

14. The device according to any one of claims 1 to 13,
wherein the motor shaft (310) of the motor (31) and the drive shaft of the machining head (33; 33a, 33b) are coupled with one another via the flexible shaft (544) and a telescopic shaft.

## Revendications

1. Dispositif comportant :
une plaque de support (51) ;
un moteur (31) ;
un actionneur linéaire (2) ; et
une tête de traitement (33 ; 33a, 33b) qui est couplée à la plaque de support (51) au moyen de l'actionneur linéaire (2), dans lequel la tête de traitement (33 ; 33a, 33b) comporte un arbre d'entraînement pour entraîner directement ou indirectement un outil rotatif (32) ;
**caractérisé par**
un arbre flexible (544) couplant un arbre de moteur (310) du moteur (31) à l'arbre d'entraînement de la tête de traitement (33 ; 33a, 33b) ; et
un joint (60) qui couple mécaniquement la tête de traitement (33 ; 33a, 33b) et l'actionneur linéaire (2) de telle sorte qu'une inclinaison uniaxiale ou biaxiale de la tête de traitement (33 ; 33a, 33b) soit possible.

2. Dispositif selon la revendication 1 :
dans lequel le joint est conçu comme un joint universel (60) qui couple mécaniquement la tête de traitement (33 ; 33a, 33b) et l'actionneur linéaire (2) de telle sorte qu'une inclinaison biaxiale de la tête de traitement (33 ; 33a, 33b) soit possible.

3. Dispositif selon la revendication 2, comportant également :
une structure de support (52) qui est reliée à une extrémité de l'actionneur linéaire (2), dans lequel l'autre extrémité de l'actionneur linéaire (2) est reliée à la plaque de support (51),
dans lequel le joint universel (60) forme une suspension à cardan au moyen de laquelle la tête de traitement (33) est montée sur la structure de support (52).

4. Dispositif selon la revendication 3,
dans lequel le joint universel (60) permet une inclinaison autour de deux axes d'inclinaison (K₁, K₂) qui traversent la tête de traitement (33) à distance d'un côté supérieur de la tête de traitement (33).

5. Dispositif selon la revendication 3 ou 4,
dans lequel la structure de support (52) comporte une plaque de base et deux branches opposées l'une à l'autre (521, 522) et dans lequel la tête de traitement (33) est montée sur les deux branches (521, 522) via la suspension à cardan.

6. Dispositif selon la revendication 5,
dans lequel la structure de support comporte une ouverture à travers laquelle passe la tête de traitement (33) ou l'arbre flexible (544).

7. Dispositif selon l'une des revendications 1 à 6,
dans lequel la tête 'de traitement (33) comporte une transmission (34), de telle sorte qu'un axe de rotation (C) de l'outil rotatif (32) et un axe de rotation (B) de l'arbre d'entraînement soient décalés axialement.

8. Dispositif selon la revendication 2, comportant également :
une structure de support (71) qui est reliée à une extrémité de l'actionneur linéaire (2) via le joint universel (60), dans lequel l'autre extrémité de l'actionneur linéaire (2) est reliée à la plaque de support (51), et
dans lequel une ou plusieurs têtes de traitement (33a, 33b) sont montées sur la structure de support (71).

9. Dispositif selon la revendication 8,
dans lequel le joint universel (60) permet une inclinaison autour de deux axes d'inclinaison (K₁, K₂) et dans lequel les axes d'inclinaison (K₁, K₂) se croisent à une intersection par laquelle passe également un axe longitudinal (A) de l'actionneur (2) .

10. Dispositif selon la revendication 8 ou 9,
dans lequel au moins deux têtes de traitement (33a, 33b) sont montées sur la structure de support (71) et dans lequel les têtes de traitement (33a, 33b) sont disposées autour du joint universel (60).

11. Dispositif selon la revendication 9 ou 10,
dans lequel les axes d'inclinaison (K₁, K₂) se trouvent dans un plan qui traverse les têtes de traitement.

12. Dispositif selon l'une des revendications 8 à 11,
dans lequel un arbre est monté sur la structure de support au moyen d'un palier (72), qui est relié à l'arbre flexible (544) et qui entraîne les arbres d'entraînement des têtes de traitement (33a, 33b) via une transmission.

13. Dispositif selon la revendication 12,
dans lequel la transmission est une transmission par courroie ou une transmission à engrenages.

14. Dispositif selon l'une des revendications 1 à 13,
dans lequel l'arbre de moteur (310) du moteur (31) et l'arbre d'entraînement de la tête de traitement (33 ; 33a, 33b) sont couplés l'un à l'autre via l'arbre flexible (544) et un arbre télescopique.
